# EUROPÄISCHE PATENTSCHRIFT

(11) **EP 1 785 405 B1**
(45) Veröffentlichungstag und Bekanntmachung des Hinweises auf die Patenterteilung: **20.01.2010**
(21) Anmeldenummer: 06023514.0
(22) Anmeldetag: 13.11.2006
(51) Int. Cl.: C04B 7/32, C04B 28/06

(54) **Ettringitbildende Bindemittelkomponente**
Binder components building ettringite
Composants de liant formant de l'ettringite

(30) Priorität: 15.11.2005 DE 102005054800
(43) Veröffentlichungstag der Anmeldung: 16.05.2007
(73) Patentinhaber: Calucem GmbH, 68161 Mannheim (DE)
(72) Erfinder: Unsin, Joachim, 69115 Heidelberg (DE); Spencer, Nicholas John, 69254 Malsch (DE); Hofmann, Fritz-Joachim, 69207 Sandhausen (DE)
(74) Vertreter: Wagner, Jutta

(56) Entgegenhaltungen:
- EP-A- 1 384 704
- WO-A-03/091179
- DE-A1- 3 218 446
- FR-A- 2 861 388
- DATABASE COMPENDEX [Online] ENGINEERING INFORMATION, INC., NEW YORK, NY, US; HEKAL E E ET AL: "EFFECT OF COMPRESSION ON MICROSTRUCTURE AND THERMAL STABILITY OF ETTRINGITE" XP002486326 Database accession no. EIX87110183574 & PROC INT CONF CEM 1986 INT CEMENT MICROSCOPY ASSOC, DUNCANVILLE, TX, USA, 1986, Seiten 227-243,
- DATABASE WPI Week 197415 Thomson Scientific, London, GB; AN 1974-27748V XP002486328 & JP 48 084830 A (DENKI K K) 10. November 1973 (1973-11-10)
- DATABASE COMPENDEX [Online] ENGINEERING INFORMATION, INC., NEW YORK, NY, US; CLARK B A ET AL: "Formation of calcium sulfoaluminate hydrate compounds. Part II" XP002486327 Database accession no. E2000255160313 & CEM CONCR RES; CEMENT AND CONCRETE RESEARCH 2000 ELSEVIER SCIENCE LTD, EXETER, ENGL, Bd. 30, Nr. 2, 2000, Seiten 233-240,

## Beschreibung

Die vorliegende Erfindung betrifft eine ettringitbildende Bindemittelkomponente, bestehend aus einem technisch hergestellten, mineralischen Calciumaluminatphasengemisch und Calciumsulfat, ihre Verwendung in bauchemischen Zusammensetzungen, sowie die Herstellung von schnell erstarrenden und/oder erhärtenden Mörteln oder Betonen hieraus.

In der Bauchemie werden zur Herstellung von schnell erstarrenden und/oder erhärtenden Produkten seit langem Mischungen aus Portlandzement und Tonerdezement eingesetzt. Solche Mischungen beschreiben z.B. US 4,481,037, US 4,350,533 und US 3,147,129.

Aus dem Artikel "Effect of compression on microstructure and thermal stability of ettringite" (Hekal E., et al.; Proc. Int. Conf. Cem., 1986, S. 227 - 243) ist eine ettringitbildende hydratisierte Mischung bekannt, die aus Kalziumaluminat in Form eines 100 Gew% C3A enthaltenden Kalziumaluminats und Gips mit einem Molverhältnis von CaSO₄ - 2 H₂O: 3CaO - Al₂O₃ von 3 : 1 besteht. Das entspricht einem Molverhältnis von CaSO₄ - Al₂O₃ von 3 : 1.

Aus DE 32 18 446 ist ein Bindemittel bekannt, welches Calciumaluminat in Form von Mono- bis Tricalciumaluminat und Calciumsulfat enthält, wobei 3 oder mehr mol Calciumsulfat pro ein mol Aluminiumoxid in dem Calciumaluminat verwendet werden sollen.

In WO 03/91179 wird ein ettringitbildendes Bindemittel beschrieben, welches ein Calciumsulfat und ein Calciumaluminatmineral enthält, wobei das Calciumaluminatmineral ein molares Verhältnis von Calciumoxiden zu Aluminiumoxiden, die wirksam sind, von 1,2 bis 2,7 aufweist und der Gewichtsanteil wirksamen Calcium- und Aluminiumoxids an dem Mineral mindestens 30 Gew.-% beträgt. Das Gewichtsverhältnis von Caciumaluminatmineral zu Calciumsulfat soll 0,5 bis 4 betragen, das Molverhältnis Calciumsulfat zu Aluminiumoxid zwischen 0, 5 und 2 liegen.

Seit einiger Zeit sind auch, vor allem aus China, sogenannte Calciumsulfoaluminat(CSA)-Zemente erhältlich, welche auf C₄A₃ 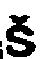 (Ye'elimit) als wirksamer Phase beruhen. Diese ettringitbildenden Bindemittel werden anstelle von Tonerdezement in bauchemischen Rezepturen eingesetzt.

Im Rahmen der vorliegenden Erfindung werden die folgenden üblichen Abkürzungen für die Bestandteile von Klinkerphasen verwendet:
C: CaO
A: Al₂O₃
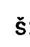 : SO₃
H: H₂O
S: SiO₂
und F : Fe₂O₃, M : MgO, N : Na₂O, K : K₂O, 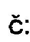 : CO₂.

Demgemäss bedeuten
CA: CaO•Al₂O₃
C₃A: 3CaO•Al₂O₃
C₁₂A₇: 12CaO•7Al₂O₃
C₄A₃ 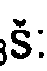 : 4CaO•3Al₂O₃•SO₃
C₃A(C 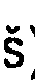 )₃H₃₂: 6CaO•Al₂O₃•3SO₃•32H₂O

Frühhochfeste, ettringitbildende Bindemittel, die auf CSA-Klinker beruhen, neigen zu mehr oder weniger starkem Quellen, d.h. bei der Erhärtung und teilweise auch bei einem späteren Wasserzutritt, tritt eine Volumenvergrößerung auf. Das Ausmaß des Quellens hängt dabei von den konkreten gewählten Bestandteilen des Bindemittels, dem Wasser/Zement-Wert, aber auch z.B. von der Lagerung ab. Dagegen unterliegen Portlandzemente und auch Mischungen aus Portlandzement und Tonerdezement einem Schwinden.

Weiterhin bestehen bei frühfesten Bindemitteln mitunter Probleme mit der erreichbaren Druckfestigkeit.

Es besteht daher weiter Bedarf an einem sowohl im Erstarrungsverhalten als auch in der Druckfestigkeit einfach beherrschbaren Bindemittel zur Verwendung bei schnell erstarrenden und/oder erhärtenden Mörteln bzw. Betonen sowie für die Herstellung bauchemischer Produkte.

Überraschend wurde nun gefunden, dass eine ettringitbildende Bindemittelkomponente aus Calciumaluminat und Calciumsulfat mit einem Molverhältnis Calciumsulfat : Al₂O₃ im Bereich von 2,2 bis 2,95 ein solches Bindemittel ergibt.

Die obige Aufgabe wird daher gelöst durch eine ettringitbildende Bindemittelkomponente bestehend aus Calciumaluminat-Phasen in Form eines mindestens 70 Gew.-% C₃A und/oder C₁₂A₇ enthaltenden mineralischen Gemischs und Calciumsulfat mit einem Molverhältnis CaSO₄ : Al₂O₃ im Bereich von 2,2 bis 2,95.

Das mineralische Gemisch, im folgenden auch kurz als Calciumaluminat bezeichnet, sollte ein C₃A oder C₁₂A₇ oder eine Mischung dieser Calciumaluminatphasen sein, insbesondere ein C₃A oder eine Mischung mit einem Anteil von mindestens 30 Gew.-% C₃A, vorzugsweise mindestens 40 Gew.-% C₃A und insbesondere mindestens 50 Gew.-% C₃A. Es ist bevorzugt, wenn die ettringitbildende Bindemittelkomponente 35 bis 50 Gew.-Teile, insbesondere 38 bis 50 Gew.-Teile Calciumaluminat enthält. Das verwendete mineralische Gemisch kann neben der bzw. den Calciumaluminatphase(n) noch weitere Bestandteile enthalten, wie z.B. CA, Siliziumdioxid, Eisenoxid, Titandioxid etc., diese sollten jedoch zusammen vorzugsweise nicht mehr als 20 Gew.-%, insbesondere nicht mehr als 15 Gew.-% und besonders bevorzugt nicht mehr als 10 Gew.-% ausmachen. Die Herstellung solcher Calciumaluminate ist dem Fachmann bekannt.

Das Calciumsulfat kann ein Anhydrit, Hemihydrat und/oder Dihydrat und/oder eine Mischung hieraus sein, wobei Calciumsulfat-Anhydrit bevorzugt ist. Vorzugsweise werden 65 bis 50 Gew.-Teile, insbesondere 62 bis 50 Gew.-Teile Calciumsulfat, berechnet als Anhydrit, eingesetzt.

Das Molverhältnis CaSO₄ : Al₂O₃ liegt im Bereich von 2,2 bis 2,95, vorzugsweise von 2,5 bis 2,95 und besonders bevorzugt von 2,65 bis 2,95. Als CaSO₄ wird hierbei das wie oben beschrieben als Anhydrit, Hemihydrat, Dihydrat oder Gemisch dieser Calciumsulfate eingebrachte CaSO₄ berücksichtigt. Der Gehalt an Al₂O₃ bezieht sich auf den Gesamtgehalt an Aluminiumoxid in dem mineralischen Gemisch. Es versteht sich, dass in dem mineralischen Gemisch unter Umständen neben den benötigten Calciumaluminatphasen C₃A und C₁₂A₇ auch geringere Anteile CA und andere Calciumaluminate sowie ggfs. auch andere Aluminiumoxidhaltige Phasen enthalten sein können. Solange jedoch der Anteil an C₃A und C₁₂A₇ in dem mineralischen Gemisch mindestens 70 Gew.-% beträgt, ergibt sich der mit der Erfindung angestrebte Erfolg.

Über die Feinheit der Komponenten des erfindungsgemäßen Bindemittels kann die Abbindezeit und auch die Druckfestigkeit beeinflusst werden. Eine höhere Feinheit führt zu einem beschleunigten Abbinden und einer höheren Druckfestigkeit. Üblicherweise werden Feinheiten im Bereich von 2.200 bis 10.000 Blaine, vorzugsweise 2.800 bis 6.000 Blaine und insbesondere 3.500 bis 5.500 Blaine gewählt. Die Mahlung kann für die Komponenten gemeinsam oder vorzugsweise getrennt erfolgen. Es ist möglich, das Calciumsulfat feiner aufzumahlen als das Calciumaluminat, was insbesondere bei einer gemeinsamen Mahlung erfolgt.

Bei der Mahlung können übliche Mahlhilfen wie beispielsweise Ethylenglycol, Propylenglycol, Triethanolamin und dergleichen zugesetzt werden.

Die erfindungsgemäße ettringitbildende Bindemittelkomponente kann entweder als solche als Bindemittel für Mörtel bzw. Betone oder aber zur Herstellung bauchemischer Zusammensetzungen verwendet werden. Unter bauchemischen Zusammensetzungen werden im Rahmen der vorliegenden Erfindung Mischungen der Bindemittelkomponenten mit Zusatzmitteln und/oder Zusatzstoffen und/oder Zuschlägen sowie ggfs. mit weiteren Bindemittelkomponenten verstanden. Beispielsweise kann die erfindungsgemäße Bindemittelkomponente zusammen mit einem Erstarrungsregler und einem Sand zu einem Reparaturmörtel verarbeitet werden. Eine weitere bevorzugte Anwendung ist der Einsatz in Fließestrichen, von denen in zunehmendem Maße ein schnelles Erhärten bzw. eine rasche Belegreife gefordert wird.

Da die erfindungsgemäße Bindemittelkomponente beim Anmachen in Wasser binnen Sekunden erstarrt, muss in der Regel für die Anwendung ein Zusatzmittel zugefügt werden, welches die Erstarrung regelt. Bevorzugt wird hierfür ein Verzögerer ausgewählt aus Natriumcitrat/Citronensäure, Kalium- bzw. Natriumtartrat/Weinsäure, Äpfelsäure, Natriumgluconat, Tetrakaliumdiphosphat, Zinkoxid, Borsäure/Borax, Calciumligninsulfonat und Mischungen davon, eingesetzt. Vorzugsweise werden organische Carbonsäuren und/oder deren Salze einzeln oder in Kombination eingesetzt. Besonders bevorzugt sind Natriumcitrat/Citronensäure und/oder Kalium- bzw. Natriumtartrat/Weinsäure und/oder Äpfelsäure und ihrer Salze.

Die Erhärtung der erfindungsgemäßen Bindemittelkomponente beruht auf einer Ettringitbildung, die formell für C₃A bzw. C₁₂A₇ nach den folgenden Gleichungen abläuft:

C₃A + 3 CaSO₄ + 32 H₂O → C₃A(Cs)₃H₃₂

C₁₂A₇ +12 CaSO₄ + 131 H₂O → 4 C₃A(Cs)₃H₃₂ + 3AH₃

Rechnerisch ist somit für eine vollständige Umsetzung ein Wasser/Bindemittelverhältnis (W/B-Wert) von etwa 0,85 für C₃A bzw. von etwa 0,78 für C₁₂A₇ einzustellen. Bei Einsatz des Calciumsulfats als Dihydrat wären entsprechend ungefähr W/B = 0,6 bzw. 0,56 notwendig.

Bei einem Einsatz der erfindungsgemäßen Bindemittelkomponente für Fließestriche ist ein entsprechender Wasserüberschuss ohnehin vorhanden.

Im Hinblick auf Konsistenz und Druckfestigkeit sind bei Mörtel bzw. Beton jedoch Wasser/Bindemittelverhältnisse (W/B) von 0,5 und darunter, insbesondere von etwa 0,4, bevorzugt. Daher sollte bei diesen Anwendungen, sofern nicht ein späterer Kontakt mit Wasser ausgeschlossen werden kann, entweder das Bindemittel durch Zusatz eines inerten Füllers oder eines Wasserbindemittels zu der erfindungsgemäßen Bindemittelkomponente so eingestellt werden, dass ein W/B-Wert im Bereich von 0,3 bis 0,5 zu einer vollständigen Umsetzung des Calciumaluminates mit dem Calciumsulfat ausreicht, oder es wird ein Stellmittel zugefügt. Wenn nach der Erhärtung keine zusätzliche Wasserbelastung mehr auftritt, kann auch mit einem stöchiometrischen Wasserunterschuss gearbeitet werden.

Unter inerten Füllern sind im Rahmen der vorliegenden Erfindung solche Substanzen zu verstehen, die an den Abbindereaktionen der ettringitbildenden Bindemittelkomponente nicht beteiligt sind und diese Reaktionen auch nicht negativ beeinflussen. Als inerter Füller eignen sich beispielsweise Flugasche oder Kalksteinmehl. Zwar vermindert der Zusatz eines inerten Füllers die mit dem Bindemittel erreichbare Druckfestigkeit, diese ist jedoch bei der erfindungsgemäßen Bindemittelkomponente so hoch, dass auch bei einem Zusatz von 50 Gew.-% Füller noch eine sehr hohe Druckfestigkeit erreicht wird. Es ist bevorzugt wenn etwa 30 bis 60 Gew.-% Füller, insbesondere 45 bis 50 Gew.-% Füller zugesetzt werden.

Als Wasserbindemittel kommen Feinststoffe mit einem hohen Wasseranspruch in Betracht. Hierzu zählen z.B. pyrogene Kieselsäure, gefälltes Calciumcarbonat oder Kieselgur. Besonders bevorzugt ist pyrogene Kieselsäure, da sie gleichzeitig die Festigkeit des Zementgefüges erhöht und seine Durchlässigkeit vermindert. Die benötigte Menge richtet sich nach dem Wasseranspruch des Bindemittels.

Als Stellmittel eignen sich z.B. Polysaccharide wie Methylcellulosen, Hydroxymethylcellulosen, Hydroxypropylmethylcellulosen, Hydroxyethylether der Methylcellulosen, Xanthane, Guar-Gum, Alginate und/oder andere in der Bauchemie gebräuchliche Verdickungsmittel.

Es ist auch möglich, die oben genannten Maßnahmen zu kombinieren, wobei natürlich entsprechend weniger Füller, Wasserbindemittel bzw. Stellmittel erforderlich sind.

Es sei hier ausdrücklich darauf hingewiesen, dass im Rahmen der Erfindung für das Wasser/Bindemittelverhältnis neben der ettringitbildenden Bindemittelkomponente auch die weiteren festen Bestandteile des Bindemittels miteinbezogen werden, d.h. der Begriff Bindemittel umfasst die erfindungsgemäße Bindemittelkomponente sowie ggfs. vorhandene inerte Füllstoffe, Wasserbindemittel etc. Nicht einbezogen werden dagegen Gesteinskörnungen wie Sand, Kies etc., die erst Bestandteil des Mörtels, Betons oder anderer bauchemischer Zusammensetzungen sind.

Die erfindungsgemäße Bindemittelkomponente erlaubt somit, auf einfache und damit auch wirtschaftliche Weise ein Bindemittel mit überschaubaren Eigenschaften bereitzustellen. Die bei Verwendung von Mischungen aus Portlandzement und Tonerdezement auftretenden Unwägbarkeiten hinsichtlich Abbindeverhalten und Quell/Schwindverhalten werden deutlich vermindert. Durch das erfindungsgemäße Verhältnis der Komponenten Calciumaluminat und Calciumsulfat konnte überraschend eine außergewöhnlich hohe Frühfestigkeit erreicht werden. Eine Kombination der ettringitbildenden Bindemittelkomponente mit Portlandzement oder Portlandzementklinker ist möglich. Erfindungsgemäß wird jedoch vorzugsweise kein Kalkhydrat oder eine Kalkhydrat-bildende Komponente, wie z.B. Portlandzement, zugefügt.

Die folgenden Beispiele sollen die Erfindung erläutern, ohne sie jedoch auf die konkret beschriebenen Ausführungsformen zu beschränken. Soweit nicht anders angegeben, beziehen sich %-Angaben und Teile auf das Gewicht.

### Beispiel 1

Mit einem mineralischen Calciumaluminatphasengemisch der folgenden Zusammensetzung:
Al₂O₃: 38,6%; CaO: 52,7%; SiO₂: 4,1%; Fe₂O₃: 1,1%; MgO: 0,5%; TiO₂: 2,0%; SO₃: 0,0%, K₂O: 0,2%; Al₂O₃:CaO=0,73, Anteil Al₂O₃ + CaO=91,3%
wurde die Druckfestigkeitsentwicklung von Mörteln bei verschiedenen Verhältnissen Calciumaluminat : Calciumsulfat untersucht. Als Calciumsulfat wurde ein Anhydrit eingesetzt. Für die Untersuchung wurden Würfel mit einer Kantenlänge von 2 cm hergestellt. Dazu wurde ein Mörtel aus 1 Teil Bindemittel, 1 Teil Feinsand (Körnung 0 - 1 mm, ISS1®, Fa. Gebr. Willersinn) und 0,4 Teilen Wasser bereitet und in Kunststoffformen gefüllt, deren Öffnung mit Klebestreifen verschlossen wurden, um ein Verdunsten des Wassers zu verhindern. Dem Bindemittel wurden 0,5 % Natriumcitrat zugefügt, um eine ausreichende Verarbeitungszeit sicherzustellen. Die Druckfestigkeiten wurden mittels einer Handpresse bestimmt. Die Ergebnisse sind in Tabelle 1 zusammengefasst.

**Tabelle 1**

| | Masseverhältnis CaSO₄:Mineral / Molverhältnis CaSO₄:Al₂O₃ | | | | | |
|---|---|---|---|---|---|---|
| | 69:31 / 4,32 | 63:37 / 3,30 | 60:40 / 2,91 | 57:43 / 2,57 | 55:45 / 2,37 | 45:55 / 1,59 |

| Zeit / [h] | Druckfestigkeit / [N/mm²] | | | | | |
|---|---|---|---|---|---|---|
| 0,5 | 13,1 | 13,4 | 18,8 | 18,4 | 18,8 | 13,4 |
| 1 | 17,6 | 19,3 | 22,1 | 23,8 | 21,8 | 18,1 |
| 2 | 28,5 | 30,3 | 35,7 | 27,0 | 31,7 | 21,8 |
| 4 | 28,3 | 32,7 | 44,4 | 44,6 | 48,4 | 37,0 |
| 6 | 34,5 | 44,1 | 62,7 | 56,3 | 56,8 | 60,3 |
| 24 | 38,9 | 69,2 | 90,0 | 92,0 | 81,8 | 72,7 |

Es zeigt sich, dass nur bei den erfindungsgemäßen Bindemittelkomponenten mit molaren Verhältnissen CaSO₄: Al₂O₃ von 2,91, 2,57 und 2,37 sehr hohe Druckfestigkeiten innerhalb kurzer Zeiten erhalten werden.

### Beispiel 2

Der Einfluss verschiedener Erstarrungsverzögerer auf Mörtel mit der erfindungsgemäßen Bindemittelkomponente wurde untersucht. Hierfür wurden wiederum mit dem in Beispiel 1 genannten Calciumaluminatphasengemisch, Anhydrit und verschiedenen Mengen Verzögerer Bindemittel hergestellt und wie in Beispiel 1 beschrieben mit Sand und Wasser zu Würfeln verarbeitet. Es wurde ein Mischungsverhältnis Anhydrit:Calciumaluminatphasengemisch von 60:40 verwendet.

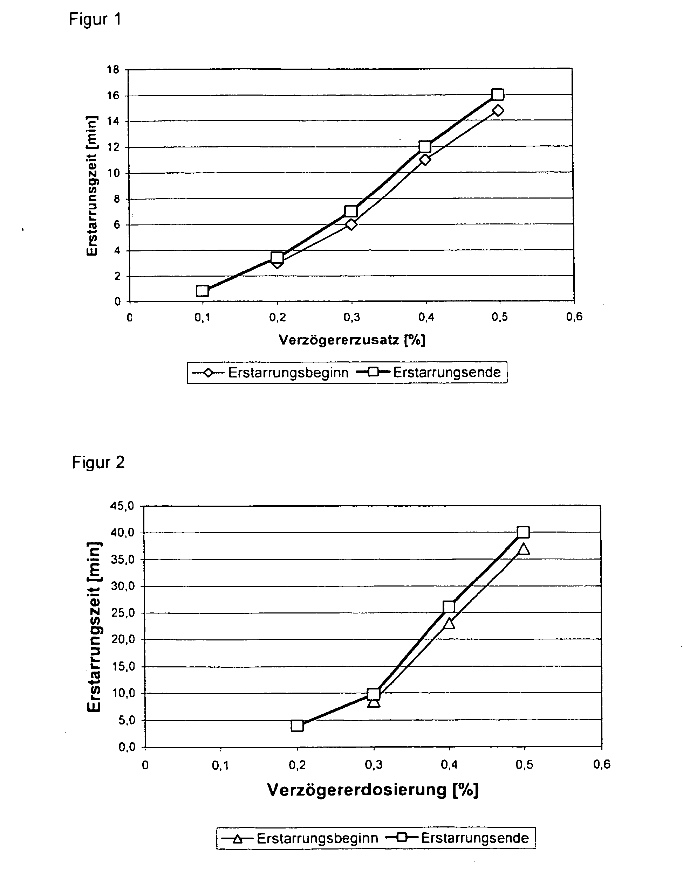

Die Abhängigkeit der Erstarrungszeiten von der Menge Verzögerer ist in der Figur 1 für Citronensäure und in der Figur 2 für Äpfelsäure wiedergegeben. Man erkennt, das sich sowohl durch die Wahl des Verzögerers als auch durch dessen Konzentration die Erstarrung in weiten Grenzen regeln lässt.

### Beispiel 3

An einer Probe, die mehrere Stunden in dünner Schicht ausgebreitet war, wurde der Einfluss einer Lagerung und eines Zusatzes von inertem Füller zur Angleichung des W/B-Werts an den rechnerischen Wasserbedarf untersucht. Hierbei wurden bei einem Mischungsverhältnis Anhydrit: Calciumaluminatphasengemisch von 57 : 43 wiederum wie oben beschrieben Mörtelwürfel hergestellt. Zusätzlich wurde mittels Zusatz von Kalksteinmehl zum Bindemittel durch Abmagerung der rechnerische Wasserbedarf gesenkt. Die erste Mischung bestand aus 1 Teil Bindemittelkomponente, 1 Teil Sand und 0,4 Teile Wasser. Die zweite, abgemagerte Mischung bestand aus 0,5 Teile Bindemittelkomponente, 0,5 Teile Kalksteinmehl, 1Teil Sand und 0,4 Teile Wasser, W/B in beiden Fällen 0,4.

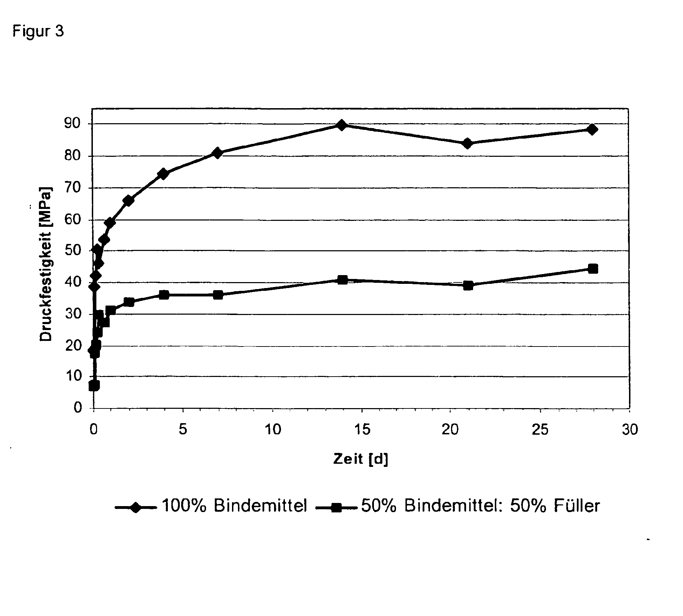

Figur 3 zeigt den Verlauf der Druckfestigkeit für das Bindemittel ohne Abmagerung (Rauten) und das Bindemittel mit Abmagerung (Quadrate) auf einen Anteil von 50 Gew.-% ettringitbildende Bindemittelkomponente. Obwohl die Druckfestigkeit in etwa halbiert wird, liegt sie in befriedigenden Bereichen oberhalb von 30 N/mm².

### Beispiel 4

Das Quellverhalten wurde untersucht. Hierbei wurden bei Mischungsverhältnissen Anhydrit: Calciumaluminatphasengemisch von 50:50 und 60:40 wiederum wie oben beschrieben Mörtelwürfel hergestellt. Zusätzlich wurde mittels Zusatz von Kalksteinmehl zum Bindemittel durch Abmagerung der rechnerische Wasserbedarf gesenkt. Die Mörtelwürfel wurden hergestellt und nach 1 h entformt und nach 1 Tag in Wasser gestellt ("Fußbad"). Die Ergebnisse der optisch erfassten Veränderungen sind in Tabelle 3 zusammengefasst.

**Tabelle 3**

| Gehalt ettringitbildende Bindemittelkomponente | Gewichtsverhältnis CaSO₄/Calciumaluminatphasengemisch | Zustand nach | |
|---|---|---|---|
| | | 4h | 100h |
| 100 % | 50:50 | Risse | zerfallen |
| | 60:40 | teilweise zerfallen | zerfallen |
| 80 % | 50:50 | Risse | zerfallen |
| | 60:40 | intakt | teilweise zerfallen |
| 60 % | 50:50 | intakt | intakt |
| | 60:40 | intakt | leichte Risse |
| 50 % | 50:50 | intakt | intakt |
| | 60:40 | intakt | intakt |

Aufgrund der unvollständigen Umsetzung wird bei einem W/B-Wert von 0,4 bei Gehalten an ettringitbildender Bindemittelkomponente von über 60 % durch die während der Wasserlagerung eintretende weitere Ettringitbildung das Gefüge zerstört. Sofern also die erfindungsgemäße Bindemittelkomponente zur Herstellung von Mörtel oder Beton, welche mit Wasser/Bindemittelwerten von weniger als 0,7 verarbeitet werden sollen, eingesetzt wird, muss bei einer späteren Wasserbelastung des Gefüges durch Abmagerung oder Zugabe von Wasserbindemitteln für eine ausreichende Menge Wasser gesorgt werden. Alternativ kann der W/B-Wert durch Stellmittel bis zum notwendigen Wassergehalt erhöht werden.

Im Rahmen der Fließestrichherstellung ergibt sich diese Problematik nicht, da dort ohnehin genug Wasser vorhanden ist.

## Patentansprüche

1. Ettringitbildende Bindemittelkomponente, bestehend aus Calciumaluminat in Form eines mindestens 70 Gew.-% C₃A und/oder C₁₂A₇ enthaltenden technisch hergestellten, mineralischen Calciumaluminatphasengemischs und Calciumsulfat mit einem Molverhältnis CaSO₄:Al₂O₃ im Bereich von 2,2 bis 2,95.

2. Bindemittelkomponente gemäß Anspruch 1, **dadurch gekennzeichnet, dass** das technisch hergestellte, mineralische Calciumaluminat-phasengemisch ein C₃A oder C₁₂A₇ oder eine Mischung dieser Calciumaluminatphasen ist.

3. Bindemittelkomponente gemäß Anspruch 1 oder 2, **dadurch gekennzeichnet, dass** das Calciumaluminatphasengemisch mindestens 30 Gew.-% C₃A, insbesondere mindestens 40 Gew.-% C₃A und ganz besonders bevorzugt mindestens 50 Gew.-% C₃A enthält.

4. Bindemittelkomponente gemäß einem der Ansprüche 1 bis 3, **dadurch gekennzeichnet, dass** 35 bis 50 Gew.-Teile des technisch hergestellten, mineralischen Calciumaluminatphasengemischs enthalten sind.

5. Bindemittelkomponente gemäß einem der Ansprüche 1 bis 4, **dadurch gekennzeichnet, dass** das technisch hergestellte, mineralische Calciumaluminatphasengemisch neben Calciumaluminat nicht mehr als 20 Gew.-%, insbesondere nicht mehr als 15 Gew.-% und besonders bevorzugt nicht mehr als 10 Gew.-% weitere Bestandteile enthält.

6. Bindemittelkomponente gemäß einem der Ansprüche 1 bis 5, **dadurch gekennzeichnet, dass** das Calciumsulfat ein Anhydrit, Hemihydrat oder Dihydrat oder eine Mischung aus mindestens zwei dieser Komponenten ist, bevorzugt ein Calciumsulfat-Anhydrit.

7. Bindemittelkomponente gemäß einem der Ansprüche 1 bis 6, **dadurch gekennzeichnet, dass** 65 bis 50 Gew.-Teile, insbesondere 62 bis 50 Gew.-Teile Calciumsulfat, berechnet als Anhydrit, enthalten sind.

8. Bindemittelkomponente gemäß einem der Ansprüche 1 bis 7, **dadurch gekennzeichnet, dass** das Molverhältnis CaSO₄:Al₂O₃ im Bereich von 2,5 bis 2,95, vorzugsweise von 2,65 bis 2,95 liegt.

9. Verwendung einer Bindemittelkomponente gemäß einem der Ansprüche 1 bis 8 zur Herstellung von bauchemischen Zusammensetzungen.

10. Verwendung gemäß Anspruch 9, **dadurch gekennzeichnet, dass** die bauchemische Zusammensetzung ein Fließestrich ist.

11. Verwendung gemäß Anspruch 9, **dadurch gekennzeichnet, dass** die bauchemische Zusammensetzung ein Mörtel oder Beton ist.

12. Verfahren zur Herstellung von schnell erstarrenden und/oder erhärtenden Mörteln oder Betonen aus einem Bindemittel, Zuschlagstoffen und Zusatzmitteln, **dadurch gekennzeichnet, dass** das Bindemittel eine ettringitbildende Bindemittelkomponente gemäß einem der Ansprüche 1 bis 8 enthält.

13. Verfahren gemäß Anspruch 12, **dadurch gekennzeichnet, dass** als Zusatzmittel ein Verzögerer verwendet wird.

14. Verfahren gemäß Anspruch 13, **dadurch gekennzeichnet, dass** ein Verzögerer ausgewählt unter Carbonsäuren, deren Salzen und Mischungen davon verwendet wird.

15. Verfahren gemäß einem der Ansprüche 12 bis 14, **dadurch gekennzeichnet, dass** die ettringitbildende Bindemittelkomponente mit einem inerten Füller und/oder einem Wasserbindemittel versetzt wird, so dass bei einem Verhältnis Wasser/Bindemittel von maximal 0,5, diejenige Wassermenge zur Verfügung steht, die für die Bildung der maximal möglichen Ettringitmenge aus der erfindungsgemäßen Bindemittelkomponente erforderlich ist.

16. Verfahren gemäß einem der Ansprüche 12 bis 14, **dadurch gekennzeichnet, dass** dem Mörtel bzw. Beton ein Stellmittel zugefügt wird, so dass bei einem Verhältnis Wasser/Bindemittel von maximal 0,5, diejenige Wassermenge zur Verfügung steht, die für die Bildung der maximal möglichen Ettringitmenge aus der erfindungsgemäßen Bindemittelkomponente erforderlich ist.

17. Verfahren gemäß Anspruch 15 und 16, **dadurch gekennzeichnet, dass** ein inerter Füller und/oder ein Wasserbindemittel und ein Stellmittel verwendet werden.

18. Verfahren gemäß einem der Ansprüche 12 bis 17, **dadurch gekennzeichnet, dass** die Bindemittelkomponente auf Feinheiten 2.800 bis 6.000 Blaine und insbesondere 3.500 bis 5.500 Blaine aufgemahlen ist.

## Claims

1. Ettringite-forming binder component consisting of calcium aluminate in the form of a technically-produced mineral calcium aluminate phase mixture containing at least 70 % by weight C₃A and/or C₁₂A₇, and calcium sulfate at a molar ratio of CaSO₄:Al₂O₃ in the range of 2.2 to 2.95.

2. Binder component according to claim 1, **characterized in that** the technically-produced mineral calcium aluminate phase mixture is a C₃A or C₁₂A₇ or a mixture of these calcium aluminate phases.

3. Binder component according to claim 1 or 2, **characterized in that** the calcium aluminate phase mixture contains at least 30 % by weight C₃A, in particular at least 40 % by weight C₃A, and particularly preferred at least 50 % by weight C₃A.

4. Binder component according to any one of the claims 1 to 3, **characterized in that** it contains 35 to 50 parts by weight of the technically-produced mineral calcium aluminate phase mixture.

5. Binder component according to any one of the claims 1 to 4, **characterized in that** the technically-produced mineral calcium aluminate phase mixture contains, aside from calcium aluminate, no more than 20 % by weight, in particular no more than 15 % by weight, and particularly preferred no more than 10 % by weight of other ingredients.

6. Binder component according to any one of the claims 1 to 5, **characterized in that** the calcium sulfate is an anhydrite, hemihydrate or dihydrate or a mixture of at least two of these components, preferably a calcium sulfate anhydrite.

7. Binder component according to any one of the claims 1 to 6, **characterized in that** it contains 65 to 50 parts by weight, in particular 62 to 50 parts by weight of calcium sulfate, calculated as anhydrite.

8. Binder component according to any one of the claims 1 to 7, **characterized in that** the molar ratio of CaSO₄:Al₂O₃ is in the range of 2.5 to 2.95, preferably 2.65 to 2.95.

9. Use of a binder component according to any one of the claims 1 to 8 for the production of compositions for construction chemistry.

10. Use according to claim 9, **characterized in that** the composition for construction chemistry is a self levelling floor screed.

11. Use according to claim 9, **characterized in that** the composition for construction chemistry is a mortar or concrete.

12. Method for the production of rapid-setting and/or -hardening mortars or concretes from a binder, aggregates, and additives, **characterized in that** the binder contains an ettringite-forming binder component according to any one of the claims 1 to 8.

13. Method according to claim 12, **characterized in that** a setting retardant is used as additive.

14. Method according to claim 13, **characterized in that** a setting retardant selected from carbonic acids, their salts, and mixtures thereof is used.

15. Method according to any one of the claims 12 to 14, **characterized in that** an inert filler and/or a water binding agent is added to the ettringite-forming binder component such that, at a ratio of water/binder of maximally 0.5, the amount of water that is required for the formation of the maximal possible quantity of ettringite from the binder component according to the invention is provided.

16. Method according to any one of the claims 12 to 14, **characterized in that** a rheology modifying agent is added to the mortar and/or concrete such that, at a ratio of water/binder of maximally 0.5, the amount of water that is required for the formation of the maximal possible quantity of ettringite from the binder component according to the invention is provided.

17. Method according to claim 15 and 16, **characterized in that** an inert filler and/or a water binding agent and a rheology modifying agent are used.

18. Method according to any one of the claims 12 to 17, **characterized in that** the binder component is ground to a fineness of 2,800 to 6,000 Blaine and, in particular, 3,500 to 5,500 Blaine.

## Revendications

1. Composant de liant formant de l'ettringite, constitué d'aluminate de calcium sous forme d'un mélange de phases d'aluminate de calcium minéral préparé industriellement, contenant au moins 70% en poids de C₃A et/ou de C₁₂A₇ et de sulfate de calcium dans un rapport molaire de CaSO₄:Al₂O₃ dans la plage de 2,2 à 2,95.

2. Composant de liant selon la revendication 1, **caractérisé en ce que** le mélange de phases d'aluminate de calcium minéral, préparé industriellement est du C₃A ou du C₁₂A₇ ou un mélange de ces phases d'aluminate de calcium.

3. Composant de liant selon la revendication 1 ou 2, **caractérisé en ce que** le mélange de phases d'aluminate de calcium contient au moins 30% en poids de C₃A, en particulier au moins 40% en poids de C₃A et de manière tout particulièrement préférée au moins 50% en poids de C₃A.

4. Composant de liant selon l'une quelconque des revendications 1 à 3, **caractérisé en ce qu'**il contient 35 à 50 parties en poids du mélange de phases d'aluminate de calcium minéral, préparé industriellement.

5. Composant de liant selon l'une quelconque des revendications 1 à 4, **caractérisé en ce que** le mélange de phases d'aluminate de calcium minéral, préparé industriellement, outre l'aluminate de calcium, ne contient pas plus de 20% en poids, en particulier pas plus de 15% en poids et de manière particulièrement préférée pas plus de 10% en poids d'autres constituants.

6. Composant de liant selon l'une quelconque des revendications 1 à 5, **caractérisé en ce que** le sulfate de calcium est une anhydrite, un hémihydrate ou un dihydrate ou un mélange d'au moins deux de ces composants, de préférence une anhydrite de sulfate de calcium.

7. Composant de liant selon l'une quelconque des revendications 1 à 6, **caractérisé en ce qu'**il contient 65 à 50 parties en poids, en particulier 62 à 50 parties en poids de sulfate de calcium, calculé en anhydrite.

8. Composant de liant selon l'une quelconque des revendications 1 à 7, **caractérisé en ce que** le rapport molaire CaSO₄:A1₂O₃ est situé dans la plage de 2,5 à 2,95, de préférence de 2,65 à 2,95.

9. Utilisant d'un composant de liant selon l'une quelconque des revendications 1 à 8 pour la préparation de compositions chimiques pour la construction.

10. Utilisation selon la revendication 9, **caractérisée en ce que** la composition chimique pour la construction est une chape fluide.

11. Utilisation selon la revendication 9, **caractérisée en ce que** la composition chimique pour la construction est un mortier ou un béton.

12. Procédé pour la préparation de mortiers ou de bétons à prise et/ou à durcissement rapide constitués par un liant, des agrégats et des additifs, **caractérisé en ce que** le liant contient un composant de liant formant de l'ettringite selon l'une quelconque des revendications 1 à 8.

13. Procédé selon la revendication 12, **caractérisé en ce qu'**on utilise un retardateur de prise comme additif.

14. Procédé selon la revendication 13, **caractérisé en ce qu'**on utilise un retardateur de prise choisi parmi les acides carboxyliques, leurs sels et les mélanges de ceux-ci.

15. Procédé selon l'une quelconque des revendications 12 à 14, **caractérisé en ce que** le composant de liant formant de l'ettringite est additionné d'une charge inerte et/ou d'un agent de fixation de l'eau de manière telle que dans le cas d'un rapport eau/liant d'au maximum 0,5, la quantité d'eau nécessaire pour la formation de la quantité maximale possible d'ettringite à partir du composant de liant selon l'invention est à disposition.

16. Procédé selon l'une quelconque des revendications 12 à 14, **caractérisé en ce que** le mortier ou le béton est additionné d'un adjuvant de manière telle que dans le cas d'un rapport eau/liant d'au maximum 0,5, la quantité d'eau nécessaire pour la formation de la quantité maximale possible d'ettringite à partir du composant de liant selon l'invention est à disposition.

17. Procédé selon la revendication 15 et 16, **caractérisé en ce qu'**on utilise une charge inerte et/ou un agent de fixation de l'eau et un adjuvant.

18. Procédé selon l'une quelconque des revendications 12 à 17, **caractérisé en ce que** le composant de liant est broyé à des finesses Blaine de 2800 à 6000 et en particulier de 3500 à 5500.
